# EUROPÄISCHE PATENTANMELDUNG

(11) **EP 4 663 441 A1**
(43) Veröffentlichungstag der Anmeldung: **17.12.2025**
(21) Anmeldenummer: 24181669.3
(22) Anmeldetag: 12.06.2024
(51) Int. Cl.: B60J 7/02, B60J 7/043

(54) **VORRICHTUNG FÜR EIN FAHRZEUGDACH UND FAHRZEUGDACH FÜR EIN KRAFTFAHRZEUG**

(71) Anmelder: Webasto SE, 82131 Stockdorf (DE)
(72) Erfinder: Popovici, Andrej, 82131 Stockdorf (DE); Becker, Christian, 82131 Stockdorf (DE)
(74) Vertreter: Epping - Hermann - Fischer

(57) **Zusammenfassung**

Eine Vorrichtung (10) für ein Fahrzeugdach (1) umfasst einen Deckel (3), eine Hebelmechanik, und eine aus Kunststoff gefertigte Führungsschiene (11). Die Hebelmechanik ist mit dem Deckel (3) gekoppelt und dazu ausgebildet, den Deckel (3) relativ zu dem Fahrzeugdach (1) zu bewegen. Die Hebelmechanik weist einen Antriebsschlitten (12) und eine Mehrzahl von Hebeln (14, 15, 16, 18) mit Führungselementen (22, 24-27, 30, 33-38) auf, die mit einer Mehrzahl von Führungs- und Kulissenbahnen (21, 23, 28-30) der Führungsschiene (11) gekoppelt sind, sodass der Deckel (3) mittels der Hebelmechanik und der Führungsschiene (11) von einer Schließstellung in eine Lüfterstellung und von der Lüfterstellung entlang einer Längsachse (L) des Fahrzeugdachs (1) in eine Offenstellung überführbar ist.

## Beschreibung

Die Erfindung betrifft eine Vorrichtung für ein Fahrzeugdach. Die Erfindung betrifft ferner ein Fahrzeugdach mit einer solchen Vorrichtung.

Einige Kraftfahrzeuge weisen Fahrzeugdächer mit einem oder mehreren Deckeln auf, die eine Durchsicht durch das Fahrzeugdach erlauben und als bewegliche Komponenten ausgebildet sind und wahlweise ein Freigeben und Verschließen einer Öffnung in dem Fahrzeugdach ermöglichen. Dabei ist es stets eine Herausforderung, Kosten gering zu halten und einen platzsparenden Aufbau zu ermöglichen.

Es ist eine Aufgabe, die der Erfindung zugrunde liegt, eine Vorrichtung für ein Fahrzeugdach mit einem Deckel zu schaffen, die eine einfache und kostengünstige Konstruktion eines Fahrzeugdachs - sowie einen platzsparenden Aufbau ermöglicht und die CO₂ Emissionen gegenüber den bisherigen Lösungen reduziert. Es ist ferner eine Aufgabe, ein Fahrzeugdach mit einer solchen Vorrichtung zu schaffen.

Die jeweilige Aufgabe wird durch die Merkmale der jeweiligen unabhängigen Patentansprüche gelöst. Vorteilhafte Weiterbildungen sind in den abhängigen Patentansprüchen angegeben.

Eine erfindungsgemäße Vorrichtung für ein Fahrzeugdach für ein Kraftfahrzeug umfasst einen Deckel, der dazu ausgebildet ist, ein aus- und einstellbares und verfahrbares Dachelement für das Fahrzeugdach einzurichten, um bedarfsweise eine Öffnung in dem Fahrzeugdach freizugeben oder zu verschließen. Der Deckel kann mittels eines Deckelträgers und/oder eines Deckelinnenblechs mit einer Dachkarosserie des Fahrzeugdachs koppelbar eingerichtet sein. Die Vorrichtung umfasst weiter eine Hebelmechanik und eine mit Kunststoff gefertigte Führungsschiene, die miteinander und mit dem Deckel gekoppelt sind. Die Hebelmechanik ist dazu ausgebildet, den Deckel relativ zu dem Fahrzeugdach zu bewegen und umfasst einen Antriebsschlitten und eine Mehrzahl von Hebeln und Führungselementen. Die mit Kunststoff gefertigte Führungsschiene weist eine Mehrzahl von Führungs- und Kulissenbahnen, die in Abstimmung auf den Antriebsschlitten und die Führungselemente der Hebelmechanik ausgebildet sind und mit diesen zusammenwirken. Somit ist der Deckel mittels der Hebelmechanik und der Führungsschiene von einer Schließstellung in eine Lüfterstellung und von der Lüfterstellung entlang einer Längsachse des Fahrzeugdachs in eine Offenstellung überführbar. Eine entsprechend inverse Bewegungsabfolge zum Wiedereinholen und Einstellen des Deckels ist mittels der Vorrichtung ebenfalls ausführbar.

Mittels der beschriebenen Vorrichtung ist auf einfache und kostengünstige Weise eine Konstruktion eines Fahrzeugdachs realisierbar, welches zudem einen platzsparenden Aufbau ermöglicht. Die Vorrichtung kann mittels lediglich einer elektrischen Antriebseinheit betrieben werden und ermöglicht aufgrund der Kunststoffausführung der Führungsschiene eine Vielzahl von Formgebungen. Im Vergleich zu konventionellen Metall-Führungsschienen kann mittels der Kunststoff-Führungsschiene ferner zu einer verbesserten CO₂-Bilanz und einer reduzierten Geräuschentwicklung beim Bewegen von verfahrbaren Komponenten in oder an der Führungsschiene beigetragen werden.

Gemäß einer Weiterbildung der Vorrichtung ist die Führungsschiene mit der Mehrzahl von Führungs- und Kulissenbahnen einstückig mittels Spritzgießen aus Kunststoff ausgebildet. Durch Verwendung von umweltfreundlichen Kunststoffmaterialien, zum Beispiel recycelter Kunststoff, kann eine besonders positive CO2-Bilanz erreicht werden und zudem kann die Führungsschiene relativ einfach und kostengünstig mit einer Vielzahl von vierschieden geformten Öffnungen, Bahnen, Ausnehmungen und/oder Kanälen ausgebildet werden.

Gemäß einer weiteren Weiterbildung der Vorrichtung ist die Führungsschiene bezogen auf einen Querschnitt senkrecht zur Längsachse T-förmig ausgebildet und weist entlang der Längsachse an gegenüberliegenden Seiten, rechts und links, jeweils einen Führungskanal für den Antriebsschlitten auf.

Im Rahmen dieser Beschreibung beziehen sich Begriffe, wie "oben", "unten", "vorne", "hinten", "rechts", "links", "horizontal" und "vertikal", auf eine betriebsbereite Ausrichtung eines zugehörigen Kraftfahrzeugs, welches ein Fahrzeugdach mit einer Ausgestaltung der Vorrichtung umfasst. Entsprechend erstreckt sich die Längsachse des Fahrzeugdachs zwischen einer Front und einem Heck des Kraftfahrzeugs und kann auch eine übliche Fahrtrichtung nach vorne repräsentieren.

Gemäß einer weiteren Weiterbildung der Vorrichtung umfasst der Antriebsschlitten einen ersten Seitenarm mit einem Kopplungselement und einen zweiten Seitenarm mit einem Kopplungselement, die bezogen auf die Längsachse auf gegenüberliegenden Seiten des Antriebsschlittens, rechts und links, ausgebildet sind. Die Seitenarme sind in Abstimmung auf Führungskanäle der Führungsschiene ausgebildet, sodass die Kopplungselemente in den jeweils zugeordneten Führungskanal eingreifen und der Antriebsschlitten bezogen auf einen Querschnitt senkrecht zur Längsachse eine U-Form oder Klammer-Form aufweist. Der Antriebsschlitten bedeckt somit abschnittsweise eine Ober- oder Unterseite der Führungsschiene sowie eine rechte und linke Seite der Führungsschiene. Insbesondere kann der Antriebsschlitten mittels eines Elektromotors und eines Antriebskabels angetrieben werden, wobei die Führungsschiene demgemäß einen zugehörigen Führungskanal für das Antriebskabel aufweist.

Die Kopplungselemente des Antriebsschlittens sowie gegebenenfalls weitere in Führungskanälen, Kulissenbahnen und/oder Öffnungen bewegbar gelagerte Elemente und/oder auch die führenden Konturen der Führungsschiene sind vorzugsweise gleitfähig ausgebildet oder beschichtet, sodass eine widerstandsarme und zuverlässige Führung dieser Elemente bereitgestellt ist.

Gemäß einer weiteren Weiterbildung der Vorrichtung weist der Antriebsschlitten einen Längsarm auf, der sich überwiegend entlang der Längsachse erstreckt und der einen Mitnehmer aufweist, welcher in Abstimmung auf eine Kulissenbahn eines ersten Ausstellhebels der Hebelmechanik ausgebildet ist, sodass der Mitnehmer innerhalb der Kulissenbahn führbar ist.

Der erste Ausstellhebel der Hebelmechanik kann auch als vorderer Ausstellhebel bezeichnet werden und umfasst in einer Ausführungsform einen ersten Seitenarm mit zwei Kopplungselementen und einen zweiten Seitenarm mit der Kulissenahn und einem Kopplungselement. Die Seitenarme sind bezogen auf die Längsachse auf gegenüberliegenden Seiten des vorderen Ausstellhebels ausgebildet. Die Kopplungselemente des ersten Seitenarms sind in einem betriebsbereiten Zustand der Vorrichtung innerhalb einer Kulissenbahn der Führungsschiene führbar gelagert, und das Kopplungselement des zweiten Seitenarms ist innerhalb eines Führungskanals der Führungsschiene führbar gelagert, sodass der erste Ausstellhebel bezogen auf einen Querschnitt senkrecht zur Längsachse eine U-Form oder Klammer-Form aufweist und drei Seiten der Führungsschiene umgibt.

Gemäß einer weiteren Weiterbildung der Vorrichtung ist der Mitnehmer mittels des Antriebsschlittens innerhalb der Kulissenbahn verfahrbar und wirkt mit einem Anschlag der Kulissenbahn den ersten Ausstellhebel zusammen, sodass bei einem weiteren Verfahren des Antriebsschlittens der erste Ausstellhebel aufgerichtet und dadurch eine Deckelvorderkante angehoben wird und darauf bei einem weiteren Verfahren des Antriebsschlittens den aufgerichteten ersten Ausstellhebel und den angehobenen Deckel nach hinten mitnimmt.

Gemäß einer weiteren Weiterbildung der Vorrichtung weist die Führungsschiene eine Verriegelungskulissenbahn und die Hebelmechanik einen Verrieglungshebel mit einem Verriegelungsvorsprung auf. Der Verriegelungshebel ist einerseits mit dem Antriebsschlitten und andererseits mit der Führungsschiene gekoppelt, sodass der Verriegelungsvorsprung innerhalb der Verriegelungskulissenbahn mittels des Antriebsschlittens zwischen einem entriegelten und einem verriegelten Zustand überführbar ist.

Der Verriegelungshebel ist insbesondere gleitend mit dem Antriebsschlitten und andererseits verschwenkbar mit einem zweiten Ausstellhebel der Hebelmechanik gekoppelt und innerhalb einer oder mehrerer Kulissenbahnen der Führungsschiene führbar gelagert, sodass mittels des Antriebsschlittens der Verriegelungshebel angetrieben und der zweite Ausstellhebel aufgerichtet und dadurch eine Deckelhinterkante angehoben werden kann und der Verriegelungshebel mittels des Verriegelungsvorsprungs innerhalb der Verriegelungskulissenbahn den aufgerichteten zweiten Ausstellhebel sichert. Die Kulissenbahnen können insbesondere am hinteren Ende nach unten gerichtet sein. Der zweite Ausstellhebel kann auch als hinterer Ausstellhebel bezeichnet werden. Beim Ausbilden der Lüfterstellung des Deckels wird der hintere Ausstellhebel zeitlich vor dem vorderen Ausstellhebel aufgerichtet, sodass an der angehobenen hinteren Deckelkante ein Luftspalt zwischen dem Deckel und der Dachhaut oder der Dachkarosserie freigegeben ist. Nachfolgend wird dann der vordere Ausstellhebel aufgerichtet und der angehobene Deckel kann nach hinten über das Fahrzeugdach verfahren werden.

Gemäß einer weiteren Weiterbildung der Vorrichtung ist der zweite Ausstellhebel mittels eines Gleiters gleitend mit dem Deckel gekoppelt, sodass bei einem weiteren Verfahren des Antriebsschlittens der Deckel relativ zu dem aufgerichteten und gesicherten zweiten Ausstellhebel gleitend verfahrbar ist. Der Gleiter bildet somit eine Unterlage oder eine Tragstruktur für den aufgerichteten Deckel, über den dieser bis zu einem vorgegebenen Überhang hinaus gleiten kann.

Die beschriebenen Ausführungsformen der Vorrichtung ermöglichen jeweils eine einfache, platzsparende und kostengünstige Konstruktion eines Fahrzeugdachs. Es ist eine Erkenntnis im Zusammenhang mit der vorliegenden Erfindung, dass konventionelle Mechaniken und Führungssysteme häufig zwei oder mehr Antriebseinheiten erfordern und eine relativ schlechte CO₂-Bilanz aufweisen. Zudem sind Aluminium- oder Metall-Führungsschienen häufig herstellungsbedingt im Wesentlichen U-förmig ausgebildet und nicht für einen Materialwechsel geeignet und erfordern zudem mehr Bauraum, insbesondere in horizontaler Ebene.

Mittels des beschriebenen Aufbaus der Vorrichtung und insbesondere aufgrund der Kunststoff-Führungsschiene und des Verriegelungshebels kann lediglich mit nur einem Elektroantrieb der Deckel zuverlässig und sicher verfahren werden. Ferner kann ein benötigter Bauraum in horizontaler Ebene, insbesondere in Querrichtung quer zu der Längsachse, reduziert werden, und durch die Verwendung alternativer umweltfreundlicher Materialien für die Führungsschiene kann zudem eine CO₂-Bilzanz verbessert werden. Darüber hinaus kann mittels des Verriegelungshebels, welcher bevorzugt auch aus Kunststoff gefertigt ist, und der Führungsschiene eine robuste Verriegelungsfunktion eingerichtet werden, die zudem zu einer geringen Geräuscherzeugung beim Schalten oder Verfahren der Hebel beiträgt. Ferner können der Verriegelungshebel, der vordere Ausstellhebel, der hintere Ausstellhebel und/oder die Schubstange und/oder andere Hochlastbauteile teilweise oder vollständig aus Kunststoff gefertigt sein und durch die Verwendung alternativer umweltfreundlicher Materialien weiter zu einer verbesserten CO₂-Bilzanz beitragen.

Ein erfindungsgemäßes Fahrzeugdach für ein Kraftfahrzeug umfasst eine Dachkarosserie, die eine Öffnung in dem Fahrzeugdach umgibt, und eine Ausführungsform der zuvor beschriebenen Vorrichtung auf. Die Vorrichtung ist mit der Dachkarosserie gekoppelt, sodass der Deckel die Öffnung in dem Fahrzeugdach verschließt oder mittels der Hebelmechanik bedarfsweise freigeben kann.

Dadurch, dass das Fahrzeugdach eine Ausführungsform der Vorrichtung umfasst, sind Merkmale und Eigenschaften der zuvor beschriebenen Vorrichtung auch für das Fahrzeugdach offenbart und umgekehrt. Darüber hinaus wird darauf hingewiesen, dass üblicherweise jeweils auf gegenüberliegenden Seiten des Fahrzeugdachs bezogen auf die Längsachse jeweils eine Ausführung der zuvor beschriebenen Vorrichtung verbaut ist, sodass die jeweiligen Komponenten in Bezug auf eine mittige Symmetrieachse spiegelsymmetrisch angeordnet und/oder ausgebildet sind. Der Deckel ist nachvollziehbar einfach vorhanden und umfasst zum Beispiel eine Glasscheibe oder ein Verbundglas mit einer Umschäumung.

Ausführungsbeispiele der Erfindung sind im Folgenden anhand der schematischen Zeichnungen näher erläutert. Es zeigen:
- Figur 1: ein Fahrzeugdach für ein Kraftfahrzeug in einer perspektivischen Ansicht,
- Figuren 2-7: ein Ausführungsbeispiel einer Vorrichtung für das Fahrzeugdach in unterschiedlichen Zuständen und jeweiligen Seitenansichten, und
- Figuren 8-14: Ausführungsbeispiele von Komponenten der Vorrichtung für das Fahrzeugdach in perspektivischen Ansichten.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

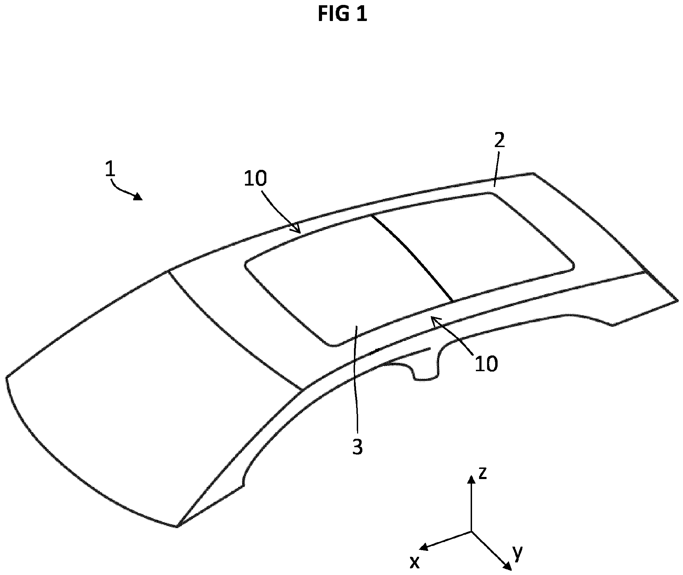

Figur 1 zeigt in einer perspektivischen Ansicht schematisch ein Fahrzeugdach 1 für ein Kraftfahrzeug. Das Fahrzeugdach 1 umfasst eine Vorrichtung 10 mit einem Deckel 3, der mittels eines Deckelträgers 17 mit einer Dachkarosserie 2 des Kraftfahrzeugs gekoppelt ist. Das Fahrzeugdach 1 kann ferner einen weiteren Deckel umfassen, sodass der Deckel 3 bezogen auf eine Längsachse L des Fahrzeugdachs 1 zum Beispiel einen vorderen Deckel einrichtet. Die Längsachse L repräsentiert auch eine Längsachse des Kraftfahrzeugs und stellt zudem zur besseren Orientierung gemäß der illustrierten Pfeilrichtung eine übliche Fahrtrichtung des betriebsbereiten Kraftfahrzeugs nach vorne dar.

Begriffe, wie "oben", "unten", "vorne", "hinten", "rechts", "links", "horizontal" und "vertikal", beziehen sich auf eine Ausrichtung der jeweiligen Komponente gemäß einer betriebsbereiten Ausgestaltung des Fahrzeugdachs 1 an einem Kraftfahrzeug, wie es in Figur 1 angedeutet ist. In der folgenden Beschreibung wird auf eine Seite des Fahrzeugdachs 1 und eine Vorrichtung 10 eingegangen. Es ist aber eine entsprechend analoge Ausbildung auf der anderen Seite des Fahrzeugdachs 1 vorzusehen, sodass Komponenten der Vorrichtung 10 in Bezug auf die Längsachse L spiegelsymmetrisch angeordnet und/oder ausgebildet sind.

Der Deckel 3 ist mittels der Vorrichtung 10 dazu eingerichtet, ein aufstellbares Dachelement auszubilden, das ferner nach hinten über das Fahrzeugdach 1 verfahren werden kann. Somit kann bedarfsweise eine Öffnung in dem Fahrzeugdach 1 freigeben oder verschlossen werden. Die Vorrichtung 10 weist zu diesem Zweck eine Hebelmechanik und eine aus Kunststoff gefertigte Führungsschiene 11, die miteinander gekoppelt sind.

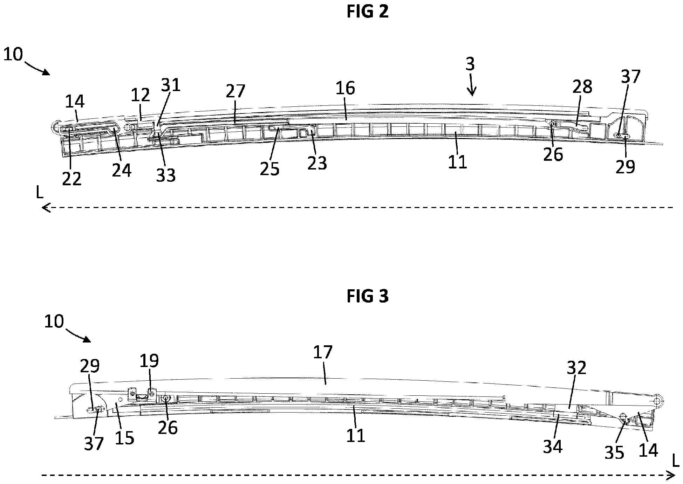

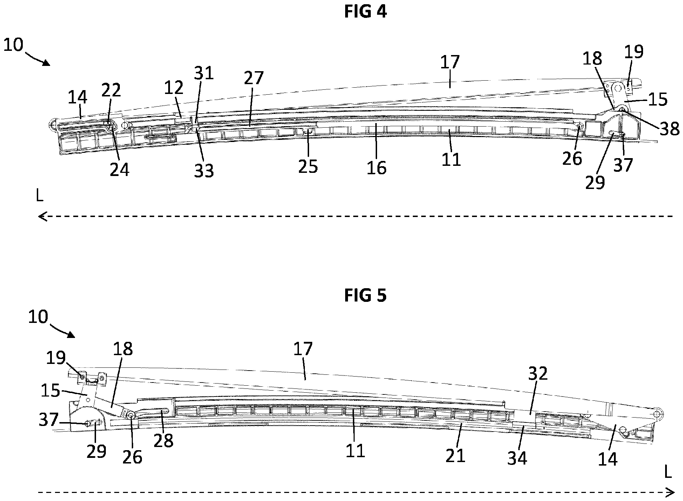

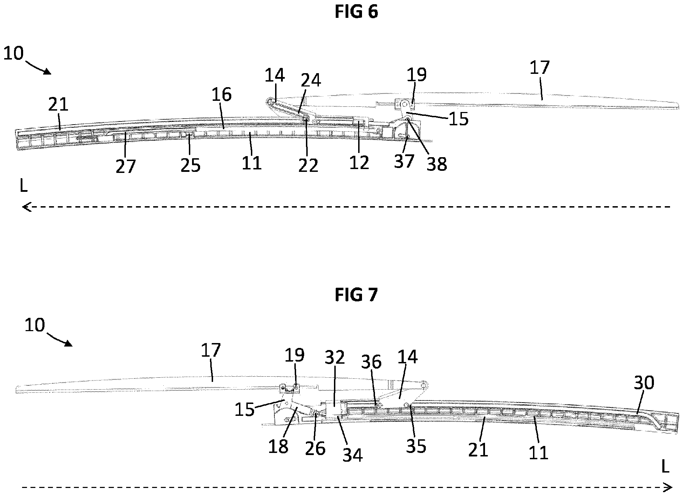

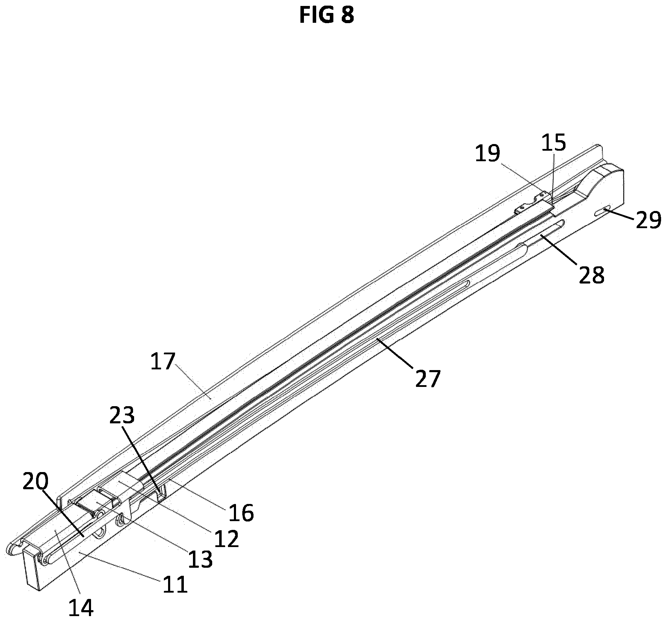

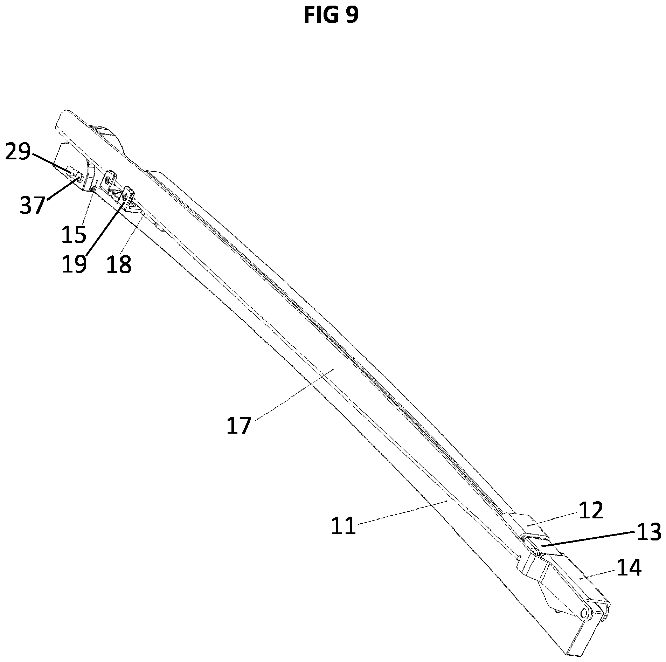

Wie anhand der nachfolgenden Figuren 2 bis 10 erläutert wird, ermöglicht die Vorrichtung 10 eine einfache und kostengünstige Konstruktion des Fahrzeugdachs 1 und erlaubt zudem einen platzsparenden Aufbau. Die Figuren 2 bis 7 zeigen die Vorrichtung 10 in unterschiedlichen Zuständen in jeweiligen Seitenansichten. Die Figuren 2 und 3 zeigen die Vorrichtung 10 in einem Zustand, in dem der Deckel 3 geschlossen ist. Die Figuren 4 und 5 zeigen die Vorrichtung 10 in einem Zustand, in dem der Deckel 3 an einer Hinterkante angehoben ist und eine Lüfterstellung einnimmt. Die Figuren 6 und 7 zeigen die Vorrichtung 10 in einem Zustand, in dem der Deckel 3 auch an einer Vorderkante angehoben und nach hinten über das Fahrzeugdach 1 verfahren ist, sodass eine Offenstellung eingerichtet ist. Die Figuren 8 bis 10 zeigen ein Ausführungsbeispiel von Komponenten der Vorrichtung 10 in perspektivischen Ansichten.

Die Hebelmechanik der Vorrichtung 10 ist mit dem Deckel 3 bzw. dem Deckelträger 17 gekoppelt und dazu ausgebildet, den Deckel 3 relativ zu dem Fahrzeugdach 1 zu bewegen. Die Hebelmechanik umfasst einen Antriebsschlitten 12, einen Führungsschlitten 13, einen ersten, vorderen Ausstellhebel 14, einen zweiten, hinteren Ausstellhebel 15, einen Verriegelungshebel 16, einen Schubhebel 18 und einen Gleiter 19. Die jeweiligen Komponenten der Hebelmechanik wirken miteinander zusammen und/oder weisen Führungselemente auf, die auf korrespondierende Führungsaufnahmen der Führungsschiene 11 abgestimmt ausgebildet sind.

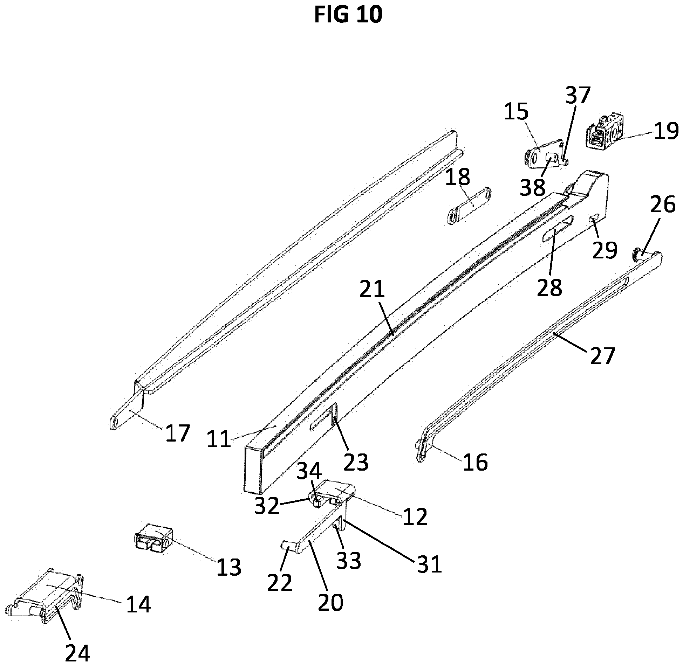

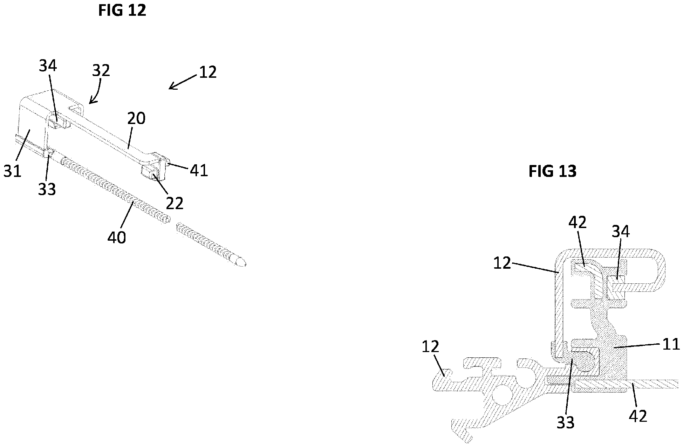

Die Führungsschiene 11 ist bezogen auf einen Querschnitt quer zu der Längsachse L T-förmig ausgestaltet und einstückig aus Kunststoff ausgebildet. Die Führungsschiene 11 weist eine Mehrzahl von Führungskanälen 21 und Kulissenbahnen 23, 28, 29, 30 auf. Die Führungskanäle 21 sind auf gegenüberliegenden Seiten der Führungsschiene 11 ausgebildet und auf Kopplungselemente abgestimmt, die an jeweiligen Seitenarmen 31, 32 des Antriebsschlittens 12 angeordnet sind und in dem zugeordneten Führungskanal 21 führbar gelagert sind. Ferner greifen Kopplungselemente des passiven Führungsgleiters 13 in den Führungskanal 21 ein (s.a. Figur 10). Der Führungsgleiter 13 kann alternativ auch zwei separate Gleiter aufweisen, die mit dem vorderen Ausstellhebel 14 gekoppelt sind und zu einer gerichteten Führung der Komponenten der Vorrichtung 10 beitragen. Mittels eines Kopplungselements 33 an dem ersten Seitenarm 31 kann der Antriebsschlitten 12 zudem in eine Kulissenbahn 27 des Verriegelungshebels 16 eingreifen und/oder mit einem Antriebskabel 40 gekoppelt sein (s. Figuren 12 bis 14).

Die Kulissenbahnen 23, 28, 29 und 30 sind auf Kopplungselemente des Verriegelungshebels 16, des vorderen Ausstellhebels 14 und des hinteren Ausstellhebels 15 vorgegeben ausgebildet. Der Verriegelungshebel 16 weist einen Verriegelungsvorsprung 25 auf, der innerhalb der Kulissenbahn 23 der Führungsschiene 11 führbar gelagert ist und in einer verriegelnden Position in eine Tasche der Kulissenbahn 23 nach unten eintaucht (s. Figuren 2, 4 und 6). Ferner weist der Verriegelungshebel 16 ein Kopplungselement 26 auf, das in der Kulissenbahn 28 führbar gelagert ist und durch diese durchgreift und auf der gegenüberliegenden Seite mit dem Schubhebel 18 gekoppelt ist.

Der vordere Ausstellhebel 14 weist Kopplungselemente 35, 36 auf, die gleitfähig in der Kulissenbahn 30 der Führungsschiene 11 gelagert sind (s. Figur 7). Auf der gegenüberliegenden Seite greift ein Kopplungselement des vorderen Ausstellhebels 14 in den Führungskanal 21 der Führungsschiene 11 ein. Der vordere Ausstellhebel 14 weist an dieser Seite eine Kulissenbahn 24 auf, in die ein Mitnehmer 22 des Antriebsschlittens 12 eingreift, der an einem Längsarm 20 des Antriebsschlittens 12 ausgebildet ist, welcher sich nach vorne in Richtung vorderer Ausstellhebel 14 erstreckt (s. Figur 10). Zusätzlich kann auch ein Kopplungselement 41 an dem Längsarm 22 vorgesehen sein, das zum Beispiel gegenüberliegend zu dem Mitnehmer 22 angeordnet ist und ein Führungselement einrichtet, welches zu einer kontrollierten Führung des Antriebsschlittens 12 beiträgt (s. Figur 12).

Der hintere Ausstellhebel 15 weist zwei Kopplungselemente 37, 38 auf, die in Kulissenbahnen der Führungsschiene 11 eingreifen und führbar gelagert sind. Das Kopplungselement 37 ist innerhalb der Kulissenbahn 29 angeordnet und das Kopplungselement 38 ist in einer nach oben offenen Kulissenbahn 39 der Führungsschiene 11 angeordnet, sodass das Kopplungselement 38 beim Aufrichten oder Aufstellen der hinteren Deckelkante vorgegeben aus der Kulissenbahn nach oben austreten kann (s. Figuren 4, 6 und 11).

Der vordere Ausstellhebel 14 ist verschwenkbar mit dem Deckelträger 17, der Führungsschiene 11 und dem Antriebsschlitten 12 gekoppelt. Der vordere Ausstellhebel 14 und der Antriebsschlitten 12 sind aufgrund ihrer Seitenarme und Kopplungselemente in gewissem Maße U-förmig oder Klammerförmig ausgebildet und bedecken abschnittsweise drei Seiten der Führungsschiene 11. Der Antriebsschlitten 12 ist verfahrbar entlang der Führungsschiene 11 mit dieser gekoppelt. Der Antriebsschlitten 12 ist mittels des Mitnehmers 22 mit dem vorderen Ausstellhebel 14 gekoppelt. Der Antriebsschlitten 12 ist mittels des Kopplungselements 33 gleitend mit dem Verriegelungshebel 16 gekoppelt. Alternativ oder zusätzlich kann das Kopplungselement 33 als ein Teil einer Kunststoffumspritzung an dem Antriebskabel 40 ausgebildet und mit dem Antriebsschlittens 12 gekoppelt sein.

Der Verriegelungshebel 16 ist gleitend mit dem Antriebsschlitten 12 gekoppelt und ferner mit der Führungsschiene 11 gekoppelt. Der Verriegelungshebel 16 ist ferner mittels des Kopplungselements 26 mit dem Schubhebel 18 verschwenkbar gekoppelt. Der Schubhebel 18 ist wiederum verschwenkbar mit dem hinteren Ausstellhebel 15 gekoppelt. Der hintere Ausstellhebel 15 ist wiederum verschwenkbar mit der Führungsschiene 11 und mittels des Gleiters 19 verschwenkbar mit dem Deckelträger 17 gekoppelt. Der Gleiter 19 stellt eine gleitfähige Unterlage oder Stützstruktur für den Deckel 3 bereit, über die er nach hinten weggleitet, wenn die Offenstellung eingerichtet wird.

Mittels der Hebelmechanik und der Kunststoff-Führungsschiene 11 kann der Deckel 3 zuverlässig von der Schließstellung (s. Figuren 2 und 3) in die Lüfterstellung (s. Figuren 4 und 5) und von der Lüfterstellung entlang der Längsachse in die Offenstellung (s. Figuren 6 und 7) überführt werden.

Ausgehend von der Schließstellung gemäß den Figuren 2 und 3 wird der Antriebsschlitten 12 mittels einer elektrischen Antriebseinheit, die zum Beispiel einen Elektromotor und ein Antriebskabel umfasst, angetrieben. Der Antriebsschlitten 12 gleitet entlang der Führungsschiene 11 nach hinten und demgemäß auch der Mitnehmer 22 innerhalb der Kulissenbahn 24. Zudem treibt der Antriebsschlitten 12 mittels des Kopplungselements 33 des ersten Seitenarms 31, das innerhalb der Kulissenbahn 27 angeordnet ist, auch den Verriegelungshebel 16 mit nach hinten. Der Verriegelungshebel 16 treibt wiederum den Schubhebel 18 an, welcher den hinteren Ausstellhebel 15 aufrichtet und die hintere Deckelkante anhebt (s. Figuren 4 und 5). Das erste Kopplungselement 37 des hinteren Ausstellhebels 15 erreicht dabei das hintere Ende der Kulissenbahn 29. Zudem tritt das zweite Kopplungselement 38 nach oben aus der offenen Kulissenbahn der Führungsschiene 11 vorgegeben aus. Somit ist der hinteren Ausstellhebels 15 ausgestellt und es wird die Lüfterstellung eingeleitet.

Wenn das Kopplungselement 26 des Verriegelungshebels 16 an das hintere Ende der Kulissenbahn 28 gelangt, kann der Verriegelungshebel 16 nicht weiter relativ zu der Führungsschiene 11 verfahren werden und verbleibt von da an ortsfest. Wenn der Antriebsschlitten 12 nun weiter nach hinten verfahren wird, gleitet der erste Seitenarm 31 mit dem Kopplungselement 33 in der Kulissenbahn 27 weiter nach hinten und bewegt sich nun relativ zu der Verriegelungshebel 16. Gemäß der vorgegebenen Führung durch die Kulissenbahn 27 wird der Verriegelungshebel 16 durch den Antriebsschlitten 12 nach unten gedrückt, sodass der Verriegelungsvorsprung 25 in das untere Ende der Kulissenbahn 23 eintaucht. Der Verriegelungshebel 16 ist somit fixiert und sichert oder verriegelt den aufgestellten hinteren Ausstellhebel 15. Die Lüfterstellung des Deckels 3 ist somit gesichert oder verriegelt.

Zudem erreicht in diesem Zustand der Mitnehmer 22 das hintere Ende der Kulissenbahn 24 des vorderen Ausstellhebels 14, taucht nach unten entlang der vorgegebenen Bahn ab und nimmt den vorderen Ausstellhebel 14 mit. Beim weiteren Verfahren des Antriebsschlittens 12 und begründet durch die vorgegebene Führung der Kulissenbahn 30 der Führungsschiene 11 wird der vordere Ausstellhebel 14 durch den Mitnehmer 22 und die Kopplungselemente 35, 36 aufgestellt, sodass nun auch die vordere Deckelkante angehoben wird. Beim weiteren Verfahren wird der ausgestellte vordere Ausstellhebel 14 mittels des Mitnehmers 22 entlang der Führungsschiene 11 nach hinten mitgenommen und der Deckel 3 gleitet über den Gleiter 19 des ausgestellten und gesicherten hinteren Ausstellhebel 15 hinweg bis wahlweise die vollständige Offenstellung erreicht ist. Eine entsprechend inverse Bewegungsabfolge ermöglicht dazu Einstellen der Offenstellung hin zur Lüfterstellung und weiter hin zur Schließstellung des Deckels 3.

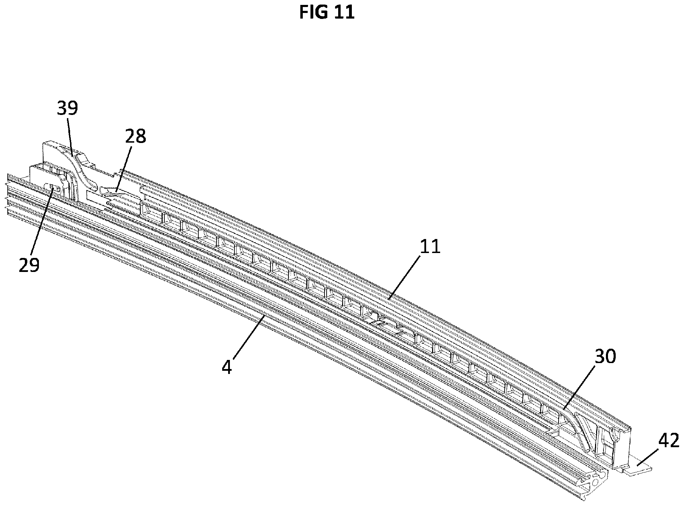

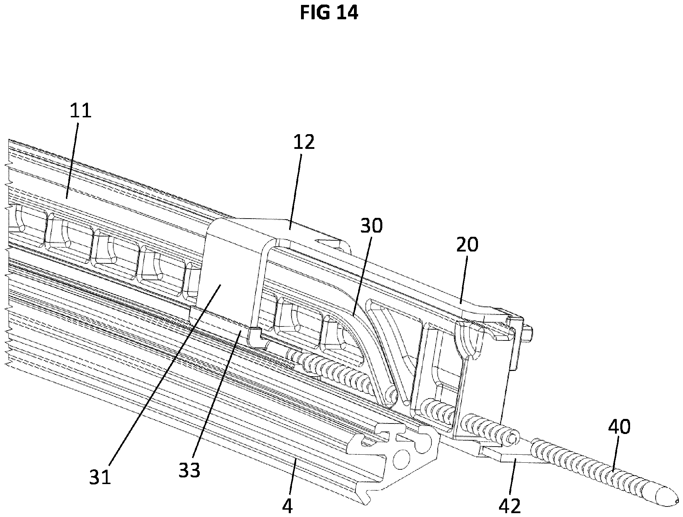

Die Figuren 11 bis 14 zeigen weitere Ansichten und Ausführungsbeispiele von Komponenten der Vorrichtung 10 in verschiedenen Ansichten. Die Führungsschiene 11 kann mittels einer Anbindungsschiene 4 mit der Dachkarosserie 2 gekoppelt werden. Der Antriebsschlitten 12 kann an einem oder beiden Seitenarmen 31, 32 ein Kopplungselement 34 aufweisen, das in einen vorgegebenen Führungskanal der Führungsschiene 11 eingreift und zu einer stabilen und zuverlässigen Führung der Komponenten der Vorrichtung 10 beiträgt (s. Figuren 10 und 12). Die Führungsschiene 11 kann ferner ein oder mehrere Verstärkungselemente 42 umfassen, die an ihr angebracht oder in ihrer Kunststoffausführung teilweise oder vollständig eingebettet sind (s. Figuren 11, 13 und 14). Die Führungsschiene 11 kann insbesondere Durchgangsöffnungen oder Kanäle für das Antriebskabel 40 aufweisen (s. Figur 14).

Mittels der beschriebenen Vorrichtung 10 ist auf einfache und kostengünstige Weise eine Konstruktion des Fahrzeugdachs 1 realisierbar, welches insbesondere im Hinblick auf eine seitliche Ausdehnung in y-Richtung einen platzsparenden Aufbau ermöglicht. Die Vorrichtung 10 kann mittels lediglich einer elektrischen Antriebseinheit betrieben werden und ermöglicht aufgrund der Kunststoffausführung der Führungsschiene 11 eine Vielzahl von Formgebungen. Im Vergleich zu konventionellen Metall-Führungsschienen kann mittels der Kunststoff-Führungsschiene ferner zu einer verbesserten CO₂-Bilanz und einer reduzierten Geräuschentwicklung beim Bewegen oder Verfahren von Komponenten in oder an der Führungsschiene 11 beigetragen werden.

### Bezugszeichenliste

- 1: Fahrzeugdach
- 2: Dachkarosserie
- 3: Deckel
- 4: Anbindungsschiene
- 10: Vorrichtung
- 11: Führungsschiene
- 12: Antriebsschlitten
- 13: Führungsschlitten
- 14: erster, vorderer Ausstellhebel
- 15: zweiter, hinterer Ausstellhebel
- 16: Verriegelungshebel
- 17: Deckelträger
- 18: Schubhebel
- 19: Gleiter des hinteren Ausstellhebels
- 20: Längsarm des Antriebsschlittens
- 21: Führungskanal der Führungsschiene
- 22: Mitnehmer des Antriebsschlittens
- 23: Verriegelungskulissenbahn
- 24: Kulissenbahn des vorderen Ausstellhebels
- 25: Verriegelungsvorsprung
- 26: Kopplungselement des Verriegelungshebel
- 27: Kulissenbahn des Verriegelungshebels
- 28: Kulissenbahn der Führungsschiene
- 29: Kulissenbahn der Führungsschiene
- 30: Kulissenbahn der Führungsschiene
- 31: erster Seitenarm des Antriebsschlittens
- 32: zweiter Seitenarm des Antriebsschlittens
- 33: Kopplungselement
- 34: Kopplungselement eines Seitenarms
- 35: erstes Kopplungselement des vorderen Ausstellhebels
- 36: zweites Kopplungselement des vorderen Ausstellhebels
- 37: erstes Kopplungselement des hinteren Ausstellhebels
- 38: zweites Kopplungselement des hinteren Ausstellhebels
- 39: Kulissenbahn der Führungsschiene
- 40: Antriebskabel
- 41: Kopplungselement
- 42: Verstärkungselement der Führungsschiene

- L: Fahrzeuglängsachse

## Patentansprüche

1. Vorrichtung (10) für ein Fahrzeugdach (1), aufweisend:
- einen Deckel (3), der dazu ausgebildet ist, mit einer Dachkarosserie (2) des Fahrzeugdachs (1) gekoppelt zu werden und ein verfahrbares Dachelement in dem Fahrzeugdach (1) einzurichten, um bedarfsweise eine Öffnung in dem Fahrzeugdach (1) freizugeben oder zu verschließen,
- eine Hebelmechanik, die mit dem Deckel (3) gekoppelt und dazu ausgebildet ist, den Deckel (3) relativ zu dem Fahrzeugdach (1) zu bewegen, wobei die Hebelmechanik einen Antriebsschlitten (12) und eine Mehrzahl von Hebeln (14, 15, 16, 18) mit Führungselementen (22, 24-27, 30, 33-38) umfasst, und
- eine mit Kunststoff gefertigte Führungsschiene (11) mit einer Mehrzahl von Führungs- und Kulissenbahnen (21, 23, 28-30), die in Abstimmung auf den Antriebsschlitten (12) und die Führungselemente (22, 24-27, 30, 33-38) der Hebelmechanik ausgebildet sind und mit dem Antriebsschlitten (12) und den Führungselementen (22, 24-27, 30, 33-38) gekoppelt ist, sodass der Deckel (3) mittels der Hebelmechanik und der Führungsschiene (11) von einer Schließstellung in eine Lüfterstellung und von der Lüfterstellung entlang einer Längsachse (L) des Fahrzeugdachs (1) in eine Offenstellung überführbar ist.

2. Vorrichtung (10) nach Anspruch 1, bei der die Führungsschiene (11) mit der Mehrzahl von Führungs- und Kulissenbahnen (21, 23, 28-30) einstückig mittels Spritzgießen aus Kunststoff ausgebildet ist.

3. Vorrichtung (10) nach einem der vorhergehenden Ansprüche, bei der die Führungsschiene (11) bezogen auf einen Querschnitt senkrecht zur Längsachse (L) T-förmig ausgebildet ist und entlang der Längsachse (L) an gegenüberliegenden Seiten jeweils einen Führungskanal (21) für den Antriebsschlitten (12) aufweist.

4. Vorrichtung (10) nach einem der vorhergehenden Ansprüche, bei der der Antriebsschlitten (12) einen ersten Seitenarm (31) mit einem Kopplungselement (33) und einen zweiten Seitenarm (32) mit einem Kopplungselement (34) aufweist, die bezogen auf die Längsachse (L) auf gegenüberliegenden Seiten des Antriebsschlittens (12) und in Abstimmung auf Führungskanäle (21) der Führungsschiene (11) ausgebildet sind, sodass der Antriebsschlitten (12) bezogen auf einen Querschnitt senkrecht zur Längsachse (L) eine U-Form oder Klammer-Form aufweist und drei Seiten der Führungsschiene (11) umgibt.

5. Vorrichtung (10) nach einem der vorhergehenden Ansprüche, bei der der Antriebsschlitten (12) einen Längsarm (20), der sich überwiegend entlang der Längsachse (L) erstreckt und der einen Mitnehmer (22) aufweist, welcher in Abstimmung auf eine Kulissenbahn (24) eines ersten Ausstellhebels (14) der Hebelmechanik ausgebildet ist, sodass der Mitnehmer (22) innerhalb der Kulissenbahn (24) führbar ist.

6. Vorrichtung (10) nach einem der vorhergehenden Ansprüche, bei der der erste Ausstellhebel (14) der Hebelmechanik einen ersten Seitenarm mit zwei Kopplungselementen (35, 36) und einen zweiten Seitenarm mit der Kulissenahn (24) und einem Kopplungselement aufweist, die bezogen auf die Längsachse (L) auf gegenüberliegenden Seiten des ersten Ausstellhebels (14) ausgebildet sind, wobei die Kopplungselemente (35, 36) des ersten Seitenarms innerhalb einer Kulissenbahn (30) der Führungsschiene (11) führbar gelagert sind, wobei das Kopplungselement des zweiten Seitenarms innerhalb eines Führungskanals (21) der Führungsschiene (11) führbar gelagert ist, sodass der erste Ausstellhebel (14) bezogen auf einen Querschnitt senkrecht zur Längsachse (L) eine U-Form oder Klammer-Form aufweist und drei Seiten der Führungsschiene (11) umgibt.

7. Vorrichtung (10) nach den Ansprüchen 5 und 6, bei der der Mitnehmer (22) mittels des Antriebsschlittens (12) innerhalb der Kulissenbahn (24) verfahrbar ist und im Zusammenwirken mit einem Anschlag der Kulissenbahn (24) den ersten Ausstellhebel (14) bei einem weiteren Verfahren des Antriebsschlittens (12) aufrichtet und dadurch eine Deckelvorderkante anhebt und darauf bei einem weiteren Verfahren des Antriebsschlittens (12) den aufgerichteten ersten Ausstellhebel (14) und den angehobenen Deckel (3) mitnimmt.

8. Vorrichtung (10) nach einem der vorhergehenden Ansprüche, bei der die Führungsschiene (11) eine Verriegelungskulissenbahn (23) und die Hebelmechanik einen Verrieglungshebel (16) mit einem Verriegelungsvorsprung (25) umfasst, wobei der Verriegelungshebel (16) einerseits mit dem Antriebsschlitten (12) und andererseits mit der Führungsschiene (11) gekoppelt ist, sodass der Verriegelungsvorsprung (25) innerhalb der Verriegelungskulissenbahn (23) mittels des Antriebsschlittens (12) zwischen einem entriegelten und einem verriegelten Zustand überführbar ist.

9. Vorrichtung (10) nach Anspruch 8, bei der der Verriegelungshebel (16) einerseits gleitend mit dem Antriebsschlitten (12) und andererseits verschwenkbar mit einem zweiten Ausstellhebel (15) der Hebelmechanik gekoppelt und innerhalb einer oder mehrerer Kulissenbahnen (23, 28) der Führungsschiene (11) führbar gelagert ist, sodass mittels des Antriebsschlittens (12) der Verriegelungshebel (16) antreibbar und der zweite Ausstellhebel (15) aufrichtbar und dadurch eine Deckelhinterkante anhebbar ist und der Verriegelungshebel (16) mittels des Verriegelungsvorsprungs (25) innerhalb der Verriegelungskulissenbahn (23) den aufgerichteten zweiten Ausstellhebel (15) sichert.

10. Vorrichtung (10) nach Anspruch 9, bei der der zweite Ausstellhebel (15) mittels eines Gleiters (19) gleitend mit dem Deckel (3) gekoppelt ist, sodass bei einem weiteren Verfahren des Antriebsschlittens (12) der Deckel (3) relativ zu dem aufgerichteten und gesicherten zweiten Ausstellhebel (15) gleitend verfahrbar ist.

11. Fahrzeugdach (1) für ein Kraftfahrzeug, aufweisend:
- eine Dachkarosserie (2), die eine Öffnung in dem Fahrzeugdach (1) umgibt, und
- eine Vorrichtung (10) nach einem der vorhergehenden Ansprüche, die mit der Dachkarosserie (2) gekoppelt ist, sodass der Deckel (3) die Öffnung in dem Fahrzeugdach (1) verschließt oder mittels der Hebelmechanik bedarfsweise freigibt.
